**Europäisches Patentamt**

**European Patent Office**

**Office européen des brevets**

(19)

(11) Veröffentlichungsnummer: **0 153 462**
A1

(12)

# EUROPÄISCHE PATENTANMELDUNG

(21) Anmeldenummer: **84115000.6**

(22) Anmeldetag: **08.12.84**

(51) Int. Cl.⁴: **F 41 F 23/06**
**F 41 H 7/12**

(30) Priorität: **01.02.84 DE 3403431**

(43) Veröffentlichungstag der Anmeldung:
**04.09.85 Patentblatt 85/36**

(84) Benannte Vertragsstaaten:
**BE DE FR GB NL**

(71) Anmelder: **Messerschmitt-Bölkow-Blohm Gesellschaft**
**mit beschränkter Haftung**
**Robert-Koch-Strasse**
**D-8012 Ottobrunn(DE)**

(72) Erfinder: **Hohmann, Claus, Dr.**
**Merianstrasse 16**
**D-8850 Donauwörth(DE)**

(54) **Gehäuse, insbesondere für Grossgeräte.**

(57) Ein Gehäuse 1 für Großgeräte ist in Leichtbauweise, vorzugweise mit als Aluminium-Preßprofile ausgebildeten Hohlkammerprofilenn ausgeführt. Die auf eine Dachplatte 2, der als steifer Biegeträger mit größerer Steifigkeit quer zur Längsachse ausgebildet ist, einwirkenden Kräfte werden über zugleich als Torsionsohr und Schubwandträger ausgeführten Wandelemente 3, 6, 7 und 8 in eine Bodenscheibe 9 eingeleitet.

FIG. 1

EP 0 153 462 A1

Croydon Printing Company Ltd.

Gehäuse, insbesondere für Großgeräte

Die Erfindung bezieht sich auf ein Gehäuse entsprechend dem Oberbegriff des Anspruchs 1.

Bei derartigen Gehäusen , die z.B. als Unterteil einer Waffenanlage dienen, sollen die Kräfte aus dem aufgebauten Abschußrohr möglichst ohne Verformungen des Daches und der tragenden Außenwände in die Bodenkonstruktion eingeleitet werden. Da die Waffenanlage im allgemeinen auch transportabel sein soll oder als Aufbau auf eine LKW-Pritsche gesetzt wird, ist es sehr wesentlich, daß das Gehäuse neben der erforderlichen Struktursteifigkeit eine möglichst kleine Masse aufweist.

Es ist daher die Aufgabe der Erfindung, ein Gehäuse der eingangs genannten Art so auszubilden, daß es in Leichtbauweise ausgeführt ist und dabei doch den für seine Funktionsfähigkeit hohen Steifigkeitsanforderungen genügt. Diese Aufgabe wird erfindungsgemäß gelöst mit den Merkmalen des kennzeichnenden Teils des Anspruchs 1. Weiterbildungen der Erfindung sind durch die Unteransprüche gegeben.

Das erfindungsgemäße Gehäuse stellt durch seinen Aufbau eine hochfeste Struktur dar, die bei weitgehender Ausnutzung des Materials mit maximal möglichen Trägheitsradien ausgeführt ist, wodurch große Widerstandsmomente erzeugt werden. Dadurch treten auch bei extremer Belastung, die z.B. bei Schräglagen eines auf dem Dach montierten Drehturms für ein Geschütz- oder Raketenabschußrohr auftreten, nur kleinstmögliche Verformungen auf. Es wird somit ein bei bekannten Ausführungen beobachtetes

...

Verklemmen oder Verkanten des Drehturms vermieden. Das erfindungsgemäße Gehäuse bildet einen statischen Verband mit einem einwandfreien Kraftfluß aktionsseitig von der Dachplatte und reaktionsseitig in die Bodenscheibe, zwischen denen die Außenwände als Torsionsrohr-mit Schubwänden zur Aufnahme sowohl der Quer- als auch der Biegekräfte ausgebildet sind. Dabei ist die orthotrope Dachplatte durch ihre große Dicke extrem steif und trotzdem durch ihre Ausbildung aus Hohlkammerprofilen verhältnismäßig leicht. Die Außenwände sind ebenfalls als hochsteife orthotrope Platten mit großen Trägheitsradien ausgebildet, durch deren als Schubwände wirkende Deckbleche die Querkräfte den direkten Weg von der Dachplatte zur Bodenscheibe nehmen können. Dabei kann man die Deckbleche mit ihren Stegen als Aneinanderreihung von senkrechten Pfosten aus Rechteckrohren betrachten. Die bevorzugte Ausführung der Hohlkammerprofile aus Aluminium-Preßprofilen, die durch die Formgebung der Längsseiten genau fluchtend aneinander geschweißt werden können, ergibt einen besonders  günstigen und leicht zu fertigenden Strukturaufbau der tragenden Elemente. In dem Gehäuse noch vorhandene innere Wände tragen nicht mit, wodurch diese in sehr leichter Bauweise ausgeführt werden können.

Die Erfindung wird nachfolgend anhand eines in der Zeichnung dargestellten Ausführungsbeispiels näher beschrieben. Es zeigen:

Figur 1  ein Gehäuse für eine Waffenanlage in perspektivischer Ansicht;

Figur 2  das Gehäuse entsprechend Figur 1 ohne Dachplatte und

...

Figur 3 und 4 Ansichten von Hohlkammerprofilen.

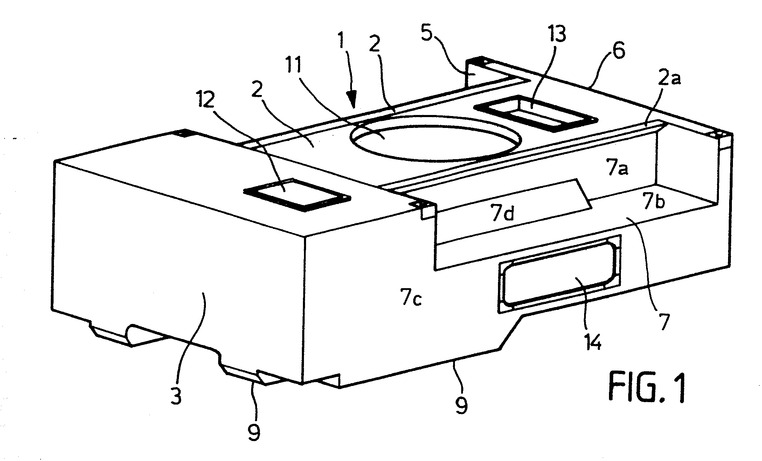

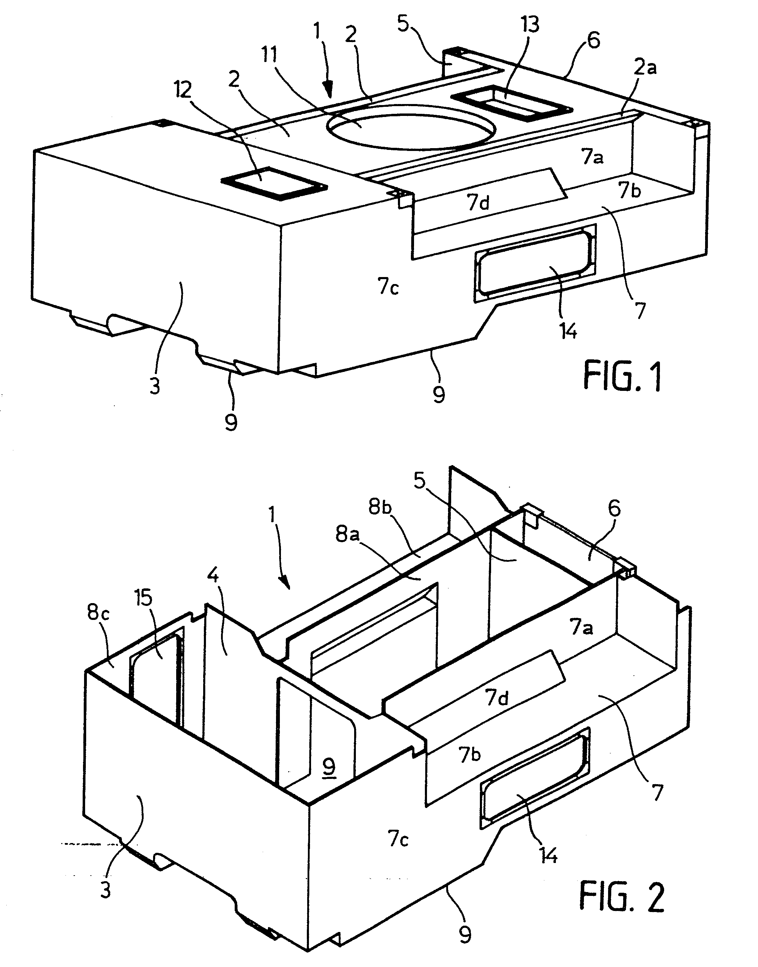

Von einem Gehäuse 1 entsprechend den Figuren 1 und 2 ist nur die tragende Struktur ohne Ein- und An bauten darge- stellt; es besteht aus einer Dachplatte2, Stirnwand 3, Zwischenwand 4, Schottwand 5, Schubwand 6, vorderen Seitenwand 7, hinteren Seitenwand 8 und Bodenscheibe 9. In der Dachplatte 2 ist ein versteifter Ausschnitt 11 angebracht, in den ein Drehturm für ein Geschütz- oder Ra- ketenabschußrohr eingebaut werden kann. Weitere Ausschnitte 12 und 13 sind für andere Geräte von der Waffenanlage vorgesehen. Die Dachplatte 2 ist als orthotroper Biege- träger großer Dicke ausgeführt, wobei die größere Steifigkeit quer zur Längsachse des Gehäuses durch einen kräftesammelnden Dreiecksträger 2a betont wird. Die Seitenwände 7 und 8 sind kombinierte Gebilde, bestehend aus den senkrechten Schubwänden 7a und 7c, die durch eine Zwischenstufe 7b und einem Verbindungsträger 7d miteinander verbunden sind. Diese Form und die versteiften Ausschnitte 14 und 15 ergeben sich aus den Aufgaben der Waffenanlage. Durch diesen Aufbau bilden die als Schubwandträger ausgebildeten Wände 3, 6, 7, 8 zugleich ein Torsionsrohr, durch das die aus dem im Ausschnitt 11 eingebauten Drehturm in die Dachplatte 2 eingeleiteten Kräfte in die Bodenscheibe 9 eingeleitet werden. Somit nehmen die Wände 3, 6, 7 und 8 sowohl den Querkraft- als auch den Torsionsschubfluß auf. Die Zwischenwände 4 und 5 sind nicht tragend mit der Dachplatte 2 verbunden und damit nicht am Kraftfluß beteiligt.

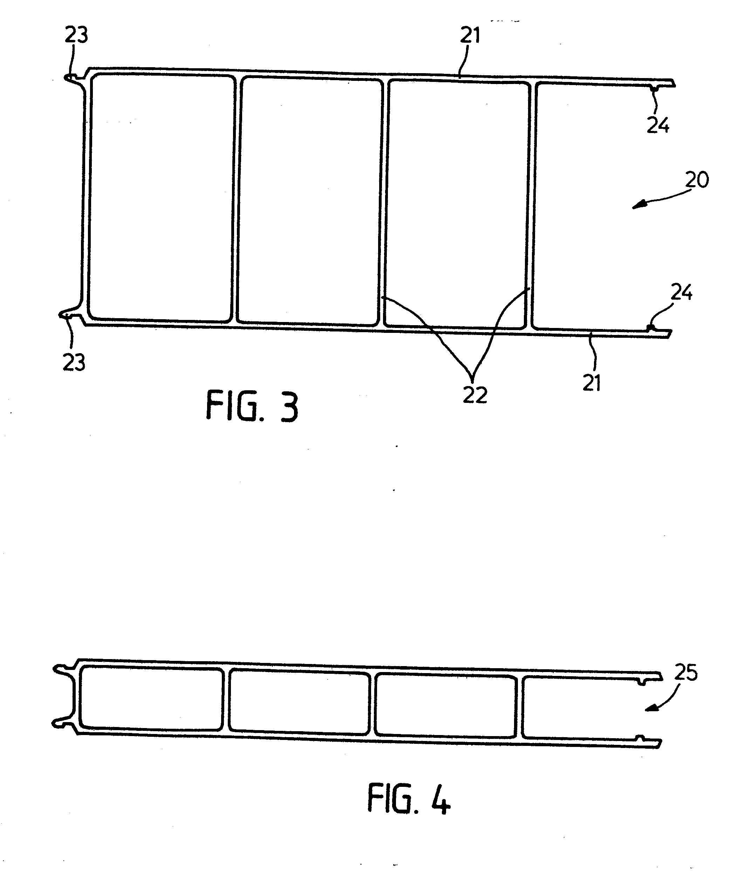

Die Figur 3 zeigt ein für die Dachplatte 2 geeignetes Hohlkammerprofil 20, welches aus Deckblechen 21 und Stegen 22 besteht und in Leichtbauweise als Aluminium-Preßprofil ausgebildet ist. Die Profile haben auf einer Längsseite nasenähnliche Vorsprünge 23 und auf der anderen

. . .

Längsseite Wülste 24. Beim Zusammensetzen mehrerer Profile 20 zu der Dachplatte 2 werden die Wülste 24 über die Vorsprünge 23 geschoben, wobei zwischen den Profilen an den Oberseiten ein Schweißspalt offen bleibt. Die Hohlkammerprofile 25 entsprechend Fig. 4 können für die Wände 3, 6, 7, 8 verwendet werden. Bei einer Ausführungsform eines Gehäuses haben die Hohlkammerprofile 20 eine Dicke von 120 mm, während für die Profile 25 nur 35 mm dick sind. Bei Deckblech- und Stegstärken von etwa 3 mm ergibt sich damit ein extrem leichtes und steifes Gehäuse.

Gehäuse, insbesondere für Großgeräte

Patentansprüche

1. Gehäuse, insbesondere für Großgeräte, bei dem auf eine Dachplatte einwirkende Kräfte über Wandelemente in eine Bodenkonstruktion eingeleitet werden, dadurch g e - k e n n z e i c h n e t, daß die Dachplatte (2) als steifer Biegeträger mit größerer Steifigkeit quer zur Längsachse, die Wandelemente (3, 6, 7 ,8) insgesamt zugleich als Torsionsrohr und Schubwandträger zur Aufnahme von Querkräften und Biegekräften und der Boden (9) als steife Scheibe ausgebildet sind, und daß alle tragenden Teile aus Deckblechen (21) und Querstegen (22) bestehenden Hohlkammerprofilen (20, 25) aufgebaut sind.

2. Gehäuse nach Anspruch 1, dadurch gekennzeichnet, daß die Hohlkammerprofile (20) der Dachplatte (2) ein Mehrfaches an Höhe aufweisen wie diejenigen der Wandelemente (3, 6, 7 ,8) und Bodenscheibe (9) und die Dachplatte an den Längsseiten mit die Kräfte auf die Wandelemente übertragende Längsträger (2a) versehen sind.

3. Gehäuse nach Anspruch 1, dadurch gekennzeichnet, daß die Längswände (7, 8) eine Stufe aufweisen, durch die die Kräfte hindurchgeleitet werden.

...

4. Gehäuse nach den Ansprüchen 1 bis 3, dadurch gekennzeichnet, daß die Dachplatte (2), die Wandelemente (3, 6, 7, 8) und die Bodenscheibe (9) aus mehreren aneinandergesetzten Hohlkammerprofilen (20, 25) zusammengesetzt, vorzugsweise zusammengeschweißt sind, wobei erforderliche Durchbrüche für An- und Einbauten gesondert versteift sind.

5. Gehäuse nach Anspruch 4, dadurch gekennzeichnet, daß die einzelnen Hohlkammerprofile (20, 25) als Aluminium-Preßprofile ausgebildet sind, die an einer Längsseite nahe den Profiloberseiten angebrachte längslaufende nasenähnliche Vorsprünge (23) und an der anderen Längsseite aus den Deckblechen nach innen hervorragende, zu den nasenähnlichen Vorsprüngen passende, Wülste (24) aufweisen, wobei nach dem Zusammensetzen von zwei Hohlkammerprofilen zwischen diesen ein Schweißspalt offen bleibt.

FIG.1

0153462

1/3

0153462

FIG. 1

FIG. 2

9494

**FIG. 3**

**FIG. 4**

## Europäisches Patentamt

# EUROPÄISCHER RECHERCHENBERICHT

| EINSCHLÄGIGE DOKUMENTE | | | EP 84115000.6 | |
|---|---|---|---|---|
| Kategorie | Kennzeichnung des Dokuments mit Angabe, soweit erforderlich, der maßgeblichen Teile | | Betrifft Anspruch | KLASSIFIKATION DER ANMELDUNG (Int. Cl.4) |
| A | US - A - 4 040 333 (PAUL SLYSH) <br> * Gesamt * <br> -- | | | F 41 F 23/06 <br> F 41 H 7/12 |
| A | US - A - 2 382 862 (AUGUSTINE DAVIS,JR.) <br> * Gesamt * <br> -- | | | |
| A | DE - A - 1 578 350 (RHEINSTAHL HENSCHEL AG) <br> * Gesamt * <br> ---- | | | |
| | | | | **RECHERCHIERTE SACHGEBIETE (Int. Cl.4)** |
| | | | | F 41 F 23/00 <br> F 41 H 7/00 <br> F 16 M 1/00 <br> F 16 M 3/00 |

Der vorliegende Recherchenbericht wurde für alle Patentansprüche erstellt.

| Recherchenort | Abschlußdatum der Recherche | Prüfer |
|---|---|---|
| WIEN | 29-05-1985 | KALANDRA |